# EUROPEAN PATENT SPECIFICATION

(11) **EP 3 394 180 B1**
(45) Date of publication and mention of the grant of the patent: **01.04.2020**
(21) Application number: 16871766.8
(22) Date of filing: 13.12.2016
(51) Int. Cl.: C09D 5/32, C09D 4/00, C09D 7/40, C08K 3/22

(54) **ULTRAVIOLET ABSORBING HARDCOAT**
UV-ABSORBIERENDER HARTÜBERZUG
REVÊTEMENT DUR ABSORBANT LES ULTRAVIOLETS

(30) Priority: 22.12.2015 US 201562270652 P
(43) Date of publication of application: 31.10.2018
(73) Proprietor: 3M Innovative Properties Company, St. Paul, MN 55133-3427 (US)
(72) Inventor: IHARA, Taiki, Shinagawa-ku Tokyo 141-8684 (JP); SUGIYAMA, Naota, Shinagawa-ku Tokyo 141-8684 (JP)
(74) Representative: Mathys & Squire
(86) International application number: PCT/US2016/066369
(87) International publication number: WO 2017/112459

(56) References cited:
- EP-A1- 2 112 205
- GB-A- 2 510 211
- US-A1- 2008 255 273

## Description

### Background

A variety of coatings and films are used to protect windows (e.g., building and automobile windows) and optical displays such as cathode ray tube (CRT) and light emitting diode (LED) displays.

Additional options for protecting windows and optical displays are desired, particularly those having relatively excellent hardness, weatherability, and optical properties (e.g., visibility) at the same time.

Patent Application US 2008/266273 discloses an aqueous polymeric coating composition having a polymer for forming a polymer matrix (binder) and nanoscale zinc oxide particles dispersed in the polymer.

Patent Application EP 2 112 205 discloses an aqueous dispersion of ZnO nanoparticles for coating.

Patent Application GB2 510 211 disclsoes a composition used to prepare coating which comprsises oxide nanoparticles.

### Summary

In one aspect, the present disclosure provides an ultraviolet (UV) absorbing hardcoat comprising a binder and a mixture of ZnO nanoparticles in a range from 1 to 90 (in some embodiments, 5 to 90, 10 to 90, 25 to 90, 40 to 90, 50 to 90, 50 to 80, or even 60 to 80) wt.%, based on the total weight of the hardcoat wherein the ZnO nanoparticles have a silica coating thereon.

In one aspect, the present disclosure provides an article comprising a substrate having a surface, and a hardcoat layer disposed on the surface of the substrate, wherein the hardcoat layer comprises a hardcoat described herein.

In one aspect, the present disclosure provides a hardcoat precursor comprising a binder and a mixture of ZnO nanoparticles in a range from 1 to 90 (in some embodiments, 25 to 90, 40 to 90, 50 to 90, 50 to 80, or even 60 to 80) wt.%, based on the total weight of the hardcoat precursor wherein the ZnO nanoparticles have a silica coating thereon.

Embodiments of hardcoats described herein typically have good transparency and hardness, and are useful, for example, for optical displays (e.g., cathode ray tube (CRT) and light emitting diode (LED) displays), personal digital assistants (PDAs), cell phones, liquid crystal display (LCD) panels, touch-sensitive screens, removable computer screens, window film, and goggles.

The Figures and the Detailed Description which follow more particularly exemplify these embodiments.

### Brief Description of the Drawings

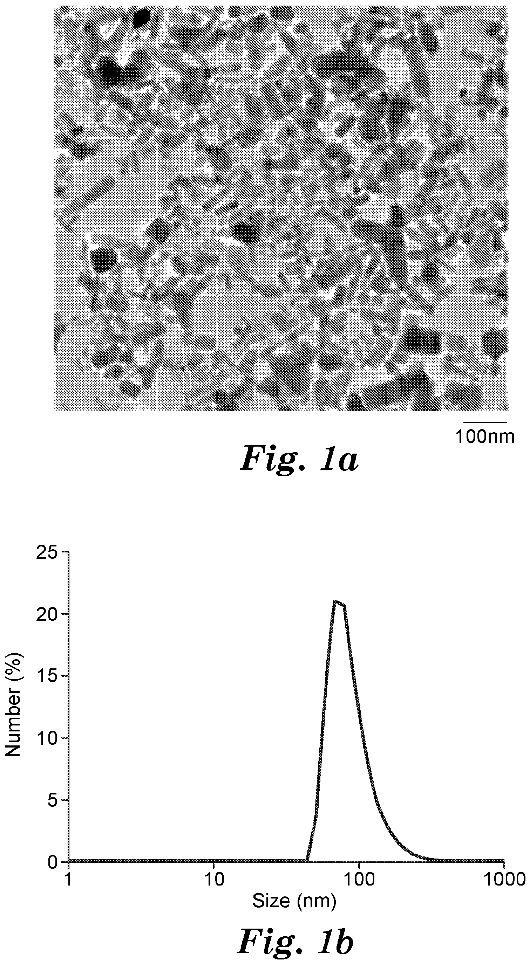

FIG. 1a is a TEM digital photomicrograph of the "as received" ZnO nanoparticles used in the Examples section.
FIG. 1b is a graph of the size distribution of the "as received" ZnO nanoparticles used in the Examples section.
FIG. 2a is a TEM digital photomicrograph of ZnO nanoparticles of Sol-2.
FIG. 2b is a TEM digital photomicrograph of ZnO nanoparticles of Sol-3.
FIG. 3 shows the UV-Vis spectra of the Examples 1 and 2 and Comparative Examples A and B.
FIGS. 4a, 4b, and 4c, are optical digital images of Example 1 and Comparative Examples A and B, respectively, after accelerated weather testing for 3000 hours.

### Detailed Description

Exemplary binder precursors include UV curable acrylate or thermal curable acrylate resin obtained by polymerizing curable monomers/oligomers or sol-gel glass. More specific examples of resins include acrylic resins, urethane resins, epoxy resins, phenol resins, and polyvinylalcohol. Further, curable monomers or oligomers may be selected from curable monomers or oligomers known in the art. In some embodiments, the resins include dipentaerythritol pentaacrylate (available, for example, under the trade designation "SR399" from Sartomer Company, Exton, PA), pentaerythritol triacrylate isophorondiisocyanate (IPDI) (available, for example, under the trade designation "UX5000" from Nippon Kayaku Co., Ltd., Tokyo, Japan), urethane acrylate (available, for example, under the trade designations "UV1700B" from Nippon Synthetic Chemical Industry Co., Ltd., Osaka, Japan; and "UB6300B" from Nippon Synthetic Chemical Industry Co., Ltd., Osaka, Japan), trimethyl hydroxyl diisocyanate/hydroxy ethyl acrylate (TMHDI/HEA, available, for example, under the trade designation "EB4858" from Daicel Cytech Company Ltd., Tokyo, Japan), polyethylene oxide (PEO) modified bis-A diacrylate (available, for example, under the trade designation "R551" from Nippon Kayaku Co., Ltd., Tokyo, Japan), PEO modified bis-A epoxyacrylate (available, for example, under the trade designation "3002M" from Kyoeishi Chemical Co., Ltd., Osaka, Japan), silane based UV curable resin (available, for example, under the trade designation "SK501M" from Nagase ChemteX Corporation, Osaka, Japan), and 2-phenoxyethyl methacrylate (available, for example, under the trade designation "SR340" from Sartomer Company); and mixtures of thereof. Use, for example, in the range from about 1.25 wt.% to about 20 wt.% of 2-phenoxyethyl methacrylate has been observed to improve adhesion to polycarbonate. Use, for example, of di-functional resins (e.g., PEO modified bis-A diacrylate ("R551") and trimethyl hydroxyl di-isocyanate/hydroxy ethyl acrylate (TMHDI/HEA) (available, for example, under the trade designation "EB4858" from Daicel Cytech Company, Ltd.) has been observed to simultaneously improve the hardness, impact resistance, and flexibility of the hardcoat. In some embodiments, it may be desirable to use curable monomers or oligomers capable of forming three-dimensional structure.

The amount of the binder in the precursor to form the hardcoat is typically sufficient to provide the hardcoat with 99 wt.% to 10 wt.% (in some embodiments, 95 wt.% to 5 wt.%, 90 wt.% to 10 wt.%, 75 wt.% to 10 wt.%, 60 wt.% to 10 wt.%, 50 wt.% to 10 wt.%, or even 40 wt.% to 20 wt.%) binder, based on the total weight of the hardcoat.

Optionally, the hardcoat precursor further comprises crosslinking agents. Exemplary crosslinking agents include poly (meth)acryl monomers selected from the group consisting of (a) di(meth)acryl containing compounds such as 1,3-butylene glycol diacrylate, 1,4-butanediol diacrylate, 1,6-hexanediol diacrylate, 1,6-hexanediol monoacrylate monomethacrylate, ethylene glycol diacrylate, alkoxylated aliphatic diacrylate, alkoxylated cyclohexane dimethanol diacrylate, alkoxylated hexanediol diacrylate, alkoxylated neopentyl glycol diacrylate, caprolactone modified neopentylglycol hydroxypivalate diacrylate, caprolactone modified neopentylglycol hydroxypivalate diacrylate, cyclohexanedimethanol diacrylate, diethylene glycol diacrylate, dipropylene glycol diacrylate, ethoxylated (10) bisphenol A diacrylate, ethoxylated (3) bisphenol A diacrylate, ethoxylated (30) bisphenol A diacrylate, ethoxylated (4) bisphenol A diacrylate, hydroxypivalaldehyde modified trimethylolpropane diacrylate, neopentyl glycol diacrylate, polyethylene glycol (200) diacrylate, polyethylene glycol (400) diacrylate, polyethylene glycol (600) diacrylate, propoxylated neopentyl glycol diacrylate, tetraethylene glycol diacrylate, tricyclodecanedimethanol diacrylate, triethylene glycol diacrylate, tripropylene glycol diacrylate; (b) tri(meth)acryl containing compounds such as glycerol triacrylate, trimethylolpropane triacrylate, ethoxylated triacrylates (e.g., ethoxylated (3) trimethylolpropane triacrylate, ethoxylated (6) trimethylolpropane triacrylate, ethoxylated (9) trimethylolpropane triacrylate, ethoxylated (20) trimethylolpropane triacrylate), pentaerythritol triacrylate, propoxylated triacrylates (e.g., propoxylated (3) glyceryl triacrylate, propoxylated (5.5) glyceryl triacrylate, propoxylated (3) trimethylolpropane triacrylate, propoxylated (6) trimethylolpropane triacrylate), trimethylolpropane triacrylate, tris(2-hydroxyethyl)isocyanurate triacrylate; (c) higher functionality (meth)acryl containing compounds such as ditrimethylolpropane tetraacrylate, dipentaerythritol pentaacrylate, ethoxylated (4) pentaerythritol tetraacrylate, pentaerythritol tetraacrylate, caprolactone modified dipentaerythritol hexaacrylate; (d) oligomeric (meth)acryl compounds such as, for example, urethane acrylates, polyester acrylates, epoxy acrylates; polyacrylamide analogues of the foregoing; and combinations thereof. Such materials are commercially available, including at least some that are available, for example, from Sartomer Company; UCB Chemicals Corporation, Smyrna, GA; and Aldrich Chemical Company, Milwaukee, WI. Other useful (meth)acrylate materials include hydantoin moiety-containing poly(meth)acrylates, for example, as reported in U.S. Pat. No. 4,262,072 (Wendling et al.).

An exemplary crosslinking agent comprises at least three (meth)acrylate functional groups. Exemplary commercially available crosslinking agents include those available from Sartomer Company such as trimethylolpropane triacrylate (TMPTA) (available under the trade designation "SR351"), pentaerythritol tri/tetraacrylate (PETA) (available under the trade designations "SR444" and "SR295"), and pentraerythritol pentaacrylate (available under the trade designation "SR399"). Further, mixtures of multifunctional and lower functional acrylates, such as a mixture of PETA and phenoxyethyl acrylate (PEA), available from Sartomer Company under the trade designation "SR399," may also be utilized. These exemplary crosslinking agents may be used as the curable monomers or oligomers.

In some embodiments, the binder comprises monofunctional acrylate (e.g., 1.25 wt.% to 20 wt.% in solid of monofunctional acrylate, based on the total weight of the binder). In some embodiments, the binder comprises difunctional acrylate (e.g., 1.25 wt.% to 20 wt.% in solid of difunctional acrylate, based on the total weight of the binder). In some embodiments, the binder comprises mutifunctional (e.g., trifunctional or tetrafunctional) acrylate (e.g., 20 wt.% to 80 wt.% (in some embodiments, 60 wt.% to 80 wt.%) in solid of mutifunctional (e.g., trifunctional or tetrafunctional) acrylate, based on the total weight of the binder).

Suitable ZnO nanoparticles are known in the art and include those commercially available from BYK-Chemie GmbH, Wesel, Germany under the trade designation "NANOBYK3820," and from NanoMaterials Technology Pte Ltd., Bukit Batok Crescent, Signapore under the trade designation "NANO-D 133W."

In some embodiments, the mixture of ZnO nanoparticles present in the hardcoat is in a range from 1 wt.% to 90 wt.%, 5 wt.% to 95 wt.%, 10 wt.% to 90 wt.%, 25 wt.% to 90 wt.%, 40 wt.% to 90 wt.%, 50 wt.% to 90 wt.%, 50 wt.% to 80 wt.%, or even 50 wt.% to 90 wt.%, based on the total weight of the hardcoat.

In some embodiments, the ZnO nanoparticles have an size particle size in a range from 10 nm to 100 nm (25 nm to 100 nm, 25 nm to 80 nm, 50 nm to 80 nm, or even 60 nm to 80 nm). The average diameter of nanoparticles is measured with transmission electron microscopy (TEM) using commonly employed techniques in the art. For measuring the average particle size of nanoparticles, sol samples can be prepared for TEM imaging by placing a drop of the sol sample onto a 400 mesh copper TEM grid with an ultra-thin carbon substrate on top of a mesh of lacey carbon (available from Ted Pella Inc., Redding, CA). Part of the drop can be removed by touching the side or bottom of the grid with filter paper. The remainder can be allowed to dry. This allows the particles to rest on the ultra-thin carbon substrate and to be imaged with the least interference from a substrate. Then, TEM images can be recorded at multiple locations across the grid. Enough images are recorded to allow sizing of 500 to 1000 particles. The average diameters of the nanoparticles can then be calculated based on the particle size measurements for each sample. TEM images can be obtained using a high resolution transmission electron microscope (available under the trade designation "Hitachi H-9000" from Hitachi) operating at 300KV (with a LaB₆ source). Images can be recorded using a camera (e.g., Model No. 895, 2k X 2k chip available under the trade designation "GATAN ULTRASCAN CCD" from Gatan, Inc., Pleasanton, CA). Images can be taken at a magnification of 50,000X and 100,000X. For some samples, images may be taken at a magnification of 300,000X.

Typically, the thickness of the hardcoat is in a range from 80 nanometers to 30 micrometers (in some embodiments, 200 nanometers to 20 micrometers, or even 1 micrometer to 10 micrometers). Typically, by using the nanoparticles, thicker and harder hardcoat layers can be obtained.

The ZnO nanoparticles have a silica coating thereon. In some embodiments, the silica coating has an average thickness in a range from 5 nm to 50 nm (in some embodiments, 10 nm to 40 nm).

Optionally, the ZnO nanoparticles and silica coated ZnO nanoparticles may be modified with a surface treatment agent. In general a surface treatment agent has a first end that will attach to the particle surface (covalently, ionically or through strong physisorption) and a second end that imparts compatibility of the particle with the resin and/or reacts with resin during curing. Examples of surface treatment agents include alcohols, amines, carboxylic acids, sulfonic acids, phosphonic acids, silanes, and titanates. The preferred type of treatment agent is determined, in part, by the chemical nature of the nanoparticle surface. Silanes are preferred for silica and other siliceous fillers. Silanes and carboxylic acids are preferred for metal oxides. The surface modification can be done either subsequent to mixing with the monomers or after mixing. When silanes are employed, reaction of the silanes with the nanoparticle surface is preferred prior to incorporation into the binder. The required amount of surface treatment agent is dependent upon several factors such as particle size, particle type, surface treatment agent molecular weight, and surface treatment agent type. In general, it is preferred that about a monolayer of surface treatment agent be attached to the surface of the particle. The attachment procedure or reaction conditions required also depend on the surface treatment agent used. When employing silanes, surface treatment at elevated temperatures under acidic or basic conditions for about 1 hour to 24 hours is preferred. Surface treatment agents such as carboxylic acids do not usually require elevated temperatures or extended time.

Representative embodiments of surface treatment agents include compounds such as isooctyl trimethoxy-silane, N-(3-triethoxysilylpropyl) methoxyethoxyethoxyethyl carbamate, polyalkyleneoxide alkoxysilane (available, for example, under the trade designation "SILQUEST A1230" from Momentive Specialty Chemicals, Inc., Columbus, OH), N-(3-triethoxysilylpropyl) methoxyethoxyethoxyethyl carbamate, 3-(methacryloyloxy)propyltrimethoxysilane, 3-(acryloxypropyl)trimethoxysilane, 3-(methacryloyloxy)propyltriethoxysilane, 3-(methacryloyloxy) propylmethyldimethoxysilane, 3-(acryloyloxypropyl)methyldimethoxysilane, 3-(methacryloyloxy)propyldimethylethoxysilane, 3-(methacryloyloxy) propyldimethylethoxysilane, vinyldimethylethoxysilane, phenyltrimethoxysilane, n-octyltrimethoxysilane, dodecyltrimethoxysilane, octadecyltrimethoxysilane, propyltrimethoxysilane, hexyltrimethoxysilane, vinylmethyldiacetoxysilane, vinylmethyldiethoxysilane, vinyltriacetoxysilane, vinyltriethoxysilane, vinyltriisopropoxysilane, vinyltrimethoxysilane, vinyltriphenoxysilane, vinyltri-t-butoxysilane, vinyltris-isobutoxysilane, vinyltriisopropenoxysilane, vinyltris(2-methoxyethoxy)silane, styrylethyltrimethoxysilane, mercaptopropyltrimethoxysilane, 3-glycidoxypropyltrimethoxysilane, acrylic acid, methacrylic acid, oleic acid, stearic acid, dodecanoic acid, 2-[2-(2-methoxyethoxy)ethoxy]acetic acid (MEEAA), beta-carboxyethylacrylate, 2-(2-methoxyethoxy)acetic acid, methoxyphenyl acetic acid, and mixtures thereof.

Optionally, the hardcoat may further include known additives such as an anti-fog agent, an antistatic agent, an easy-clean agent such as an anti-finger printing agent, an anti-oil agent, an anti-lint agent, or an anti-smudge agent, or other agents adding an easy-cleaning function.

Addition of hexafluoropropylene oxide urethane acrylate (HFPO) or modified HFPO to the hardcoat has been observed to improve easy-clean (e.g., anti-finger printing, anti-oil, anti-lint and/or anti-smudge) functions of the hardcoat. Exemplary amounts of HFPO and modified HFPO include in a range from 0.01 wt.% to 5.0 wt.% (in some embodiments, 0.05 wt.% to 1.5 wt.%, or 0.1 wt.% to 0.5 wt.%), based on the total weight of the hardcoat.

Inclusion of silicon polyether acrylate (available, for example, under the trade designation "TEGORAD 2250" from Evonic Goldschmidt GmbH, Essen, Germany) in the hardcoat has also been observed to improve easy-clean function of the hardcoat. Exemplary amounts of silicon polyether acrylate include in a range from 0.01 wt.% to 5.0 wt.% (in some embodiments, 0.05 wt.% to 1.5 wt.%, or even 0.1 wt.% to 0.5 wt.%), based on the total weight of the hardcoat.

The specified components of the hardcoat precursor can be combined and processed into a hardcoat as is generally known in the art. For example, the following processes may be used. The hardcoat precursor can be coated onto the substrate by known coating process such as bar coating, dip coating, spin coating, capillary coating, spray coating, gravure coating, or screen printing. After drying, the coated hardcoat precursor can be cured with known polymerization methods such as ultraviolet (UV) or thermal polymerization.

In some embodiments, depending, for example, on the curable monomers and/or oligomers used, a solvent-free (i.e., organic solvent free, or 100 % water) process may be used to form the coatings, depending on the curable monomers and/or oligomers used.

In some embodiments, two or more different sized nanoparticle sols with or without modification may be mixed with curable monomers and/or oligomers in solvent with an initiator, which is adjusted to a desired weight % (in solid) by adding the solvent, to furnish a hardcoat precursor.

If the nanoparticles are surface modified, the hardcoat precursor can be made, for example, as follows. Inhibitor and a surface modification agent is added to solvent in a vessel (e.g., in a glass jar), and the resulting mixture is added to an aqueous solution having the nanoparticles dispersed therein, followed by stirring. The vessel is sealed and placed in an oven, for example, at an elevated temperature (e.g., 80°C) for several hours (e.g., 16 hours). The water is then removed from the solution by using, for example, a rotary evaporator at elevated temperature (e.g., 60°C). A solvent is charged into the solution, and then the remaining water is removed from the solution by evaporation. It may be desired to repeat the latter a couple of times. The concentration of the nanoparticles can be adjusted to the desired weight % by adjusting the solvent level.

In some embodiments, hardcoats described herein have very favorable weatherability characteristics. One exemplary embodiment of a hardcoat described herein comprises ZnO nanoparticles functionalized by 3-methacryloxypropyl-trimethoxysilane or silica-coated ZnO nanoparticles. Exemplary embodiments have been observed to maintain the haze value and show higher abrasion resistance even after accelerated weather testing (as defined in the Examples) as compared to the same hardcoat without non-functional ZnO nanoparticles. Such exemplary embodiments have also been observed to exhibit a low catalytic activity. Such exemplary embodiments have also been observed to exhibit improved abrasion resistance and lower haze.

Hardcoats described herein are useful, for example, for optical displays (e.g., cathode ray tubes (CRT) and light emitting diode (LED) displays), plastic cards, lenses or body of cameras, fans, door knobs, tap handles, mirrors, and home electronics such as cleaners or washing machines, and for optical displays (e.g., cathode ray tubes (CRT) and light emitting diode (LED) displays), personal digital assistants (PDAs), cell phones, liquid crystal display (LCD) panels, touch-sensitive screens, removable computer screens, window films, and goggles. Further, the hardcoat described herein may be useful, for example, for furniture, doors and windows, toilet bowls and bath tubs, vehicle interior/exterior, lenses (of a camera or glasses), or solar panels.

Exemplary substrates for having the hardcoat described herein thereon include a film, a polymer plate, a sheet glass, and a metal sheet. The film may be transparent or non-transparent. As used herein "transparent" refers that total transmittance is 90% or more and "untransparent" refers that total transmittance is not more than 90%. Exemplary films includes those made of polycarbonate, poly(meth)acrylate (e.g., polymethyl methacrylate (PMMA), polyolefins (e.g., polypropylene (PP)), polyurethane, polyesters (e.g., polyethylene terephthalate (PET)), polyamides, polyimides, phenolic resins, cellulose diacetate, cellulose triacetate, polystyrene, styrene-acrylonitrile copolymers, acrylonitrile butadiene styrene copolymer (ABS), epoxies, polyethylene, polyacetate and vinyl chloride, or glass. The polymer plate may be transparent or non-transparent. Exemplary polymer plates include those made of polycarbonate (PC), polymethyl methacrylate (PMMA), styrene-acrylonitrile copolymers, acrylonitrile butadiene styrene copolymer (ABS), a blend of PC and PMMA, or a laminate of PC and PMMA. The metal sheet may be flexible or rigid. As used herein "flexible metal sheet" refers to metal sheets that can undergo mechanical stresses, such as bending or stretching and the like, without significant irreversible change, and "rigid metal sheet" refers to metal sheets that cannot undergo mechanical stresses, such as bending or stretching and the like, without significant irreversible change. Exemplary flexible metal sheets include those made of aluminum. Exemplary rigid metal sheets include those made of aluminum, nickel, nickel-chrome, and stainless steel. When the metal sheets are used, it may be desirable to apply a primer layer between the hardcoat and the substrate.

Typically the thickness of the film substrate is in a range from 5 micrometers to 500 micrometers. Typically the thickness for a polymer plate is in a range from 0.5 mm to 10 mm (in some embodiments, from 0.5 mm to 5 mm, or even 0.5 mm to 3 mm), for the sheet glass or the metal sheet as the substrate, the typical thickness is in a range from 5 micrometers to 500 micrometers, or 0.5 mm to 10 mm (in some embodiments, from 0.5 mm to 5 mm, or even 0.5 mm to 3 mm), although thickness outside of these ranges may also useful.

Hardcoats described herein may be disposed on more than one surface of the substrate, for those substrates having more than one surface. Also, more than one hardcoat layer may be applied to a surface. Typically, the thickness of hardcoat layers described herein are in a range from 80 nanometers to 30 micrometers (in some embodiments, 200 nanometers to 20 micrometers, or even 1 micrometer to 10 micrometers), although thickness outside of these ranges may also be useful.

In some embodiments, the article may further comprise a functional layer such as primer layer between the hardcoat layer and the substrate. Optionally, an adhesive layer may be applied on the opposite surface of the substrate from the hardcoat layer. Exemplary adhesives are known in the art, including acrylic adhesive, urethane adhesive, silicone adhesive, polyester adhesive, and rubber adhesive.

Further, if an adhesive layer is present, optionally a linear (e.g., release liner) can be included over the adhesive layer. Release liners are known in the art and include paper and a polymer sheet.

The hardcoat precursor can be prepared by combining components using techniques known in the art such as adding curable monomers and/or oligomers in solvent (e.g., methyl ethyl ketone (MEK) or 1-methoxy-2-propanol (MP-OH)) with an inhibitor to solvent. In some embodiments, no solvent can be used depending on the curable monomers and/or oligomers used. The hardcoat precursor may further include known additives such as anti-fog agent and/or antistatic agent.

Techniques for applying the hardcoat precursor (solution) to the surface of the substrate are known in the art and include bar coating, dip coating, spin coating, capillary coating, spray coating, gravure coating and screen printing. The coated hardcoat precursor can be dried and cured by polymerization methods known in the art, including UV or thermal polymerization.

### -Exemplary Embodiments

1A. An ultraviolet absorbing hardcoat comprising:
   a binder (e.g., UV cured acrylate or thermal curable acrylate), and
   a mixture of ZnO nanoparticles in a range from 1 to 90 (in some embodiments, 5 to 90, 10 to 90, 25 to 90, 40 to 90, 50 to 90, 50 to 80, or even 60 to 80) wt.%, based on the total weight of the hardcoat wherein the ZnO nanoparticles have a silica coating thereon.
2A. The ultraviolet absorbing hardcoat of Exemplary Embodiment 1A, wherein the ZnO nanoparticles have an average particle size in a range from about 10 nm to 100 nm (25 nm to 100 nm, 25 nm to 80 nm, 50 nm to 80 nm, or even 60 nm to 80 nm).
4A. The ultraviolet absorbing hardcoat of Exemplary Embodiment 3A, wherein the silica coating has an average thickness in a range from 5 nm to 50 nm (in some embodiments, 10 nm to 40 nm).
5A. The hardcoat of either Exemplary Embodiment 3A or 4A, wherein the silica coating is surface modified.
6A. The hardcoat of any preceding A Exemplary Embodiment, wherein the ZnO nanoparticles include surface modified nanoparticles.
7A. The hardcoat according to any preceeding A Exemplary Embodiment, wherein the binder comprises hexafluoropropylene oxide urethane acrylate.
8A. The hardcoat according to Exemplary Embodiment 7A, wherein the binder further comprises silicone polyether acrylate.
9A. The hardcoat according to any of Exemplary Embodiments 1A to 6A, wherein the binder comprises 1.25 wt.% to 20 wt.% in solid of monofunctional acrylate, based on the total weight of the binder.
10A. The hardcoat according to any of Exemplary Embodiments 1A to 6A, wherein the binder comprises 1.25 wt.% to 20 wt.% in solid of difunctional acrylate, based on the total weight of the binder.
11A. The hardcoat according to any of Exemplary Embodiments 1A to 6A, wherein the binder comprises 20 wt.% to 80 wt.% (in some embodiments, 60 wt.% to 80 wt.%) in solid of mutifunctional (e.g., trifunctional or tetrafunctional) acrylate, based on the total weight of the binder.
12A. An article comprising:
   a substrate having a surface, and
   a hardcoat layer disposed on the surface of the substrate, wherein the hardcoat layer comprises the hardcoat according to any preceding A Exemplary Embodiment.
13A. The article according to Exemplary Embodiment 12A, wherein the substrate is a film or a polymer plate.
14A. The article according to Exemplary Embodiment 12A, wherein the substrate is one of a film or a polymer plate.
15A. The article according to either Exemplary Embodiment 12A or 13A, further comprising a primer layer between the substrate and the hardcoat layer.
1B. An ultraviolet absorbing hardcoat precursor comprising:
   a binder precursor (e.g., UV curable acrylate or thermal curable acrylate), and
   a mixture of ZnO nanoparticles in a range from 5 to 95 (in some embodiments, 25 to 90, 40 to 90, 50 to 90, 50 to 80, or even 60 to 80) wt.%, based on the total weight of the hardcoat precursor wherein the ZnO nanoparticles have a silica coating thereon.
2B. The ultraviolet absorbing hardcoat precursor of Exemplary Embodiment 1B, wherein the ZnO nanoparticles have an average particle size in a range from about 10 nm to 100 nm (25 nm to 100 nm, 25 nm to 80 nm, 50 nm to 80 nm, or even 60 nm to 80 nm).
4B. The ultraviolet absorbing hardcoat precursor of Exemplary Embodiment 3B, wherein the silica coating has an average thickness in a range from 5 nm to 50 nm (in some embodiments, 10 nm to 40 nm). 5B. The ultraviolet absorbing hardcoat precursor of either Exemplary Embodiment 3B or 4B, wherein the silica coating is surface modified.
6B. The ultraviolet absorbing hardcoat precursor of any preceding B Exemplary Embodiment, wherein the ZnO nanoparticles include surface modified nanoparticles.
7B. The ultraviolet absorbing hardcoat precursor of any preceding B Exemplary Embodiment, wherein the binder precursor comprises hexafluoropropylene oxide urethane acrylate.
8B. The ultraviolet absorbing hardcoat precursor of Exemplary Embodiment 7B, wherein the binder further comprises silicone polyether acrylate.
9B. The ultraviolet absorbing hardcoat precursor of any of Exemplary Embodiments 1B to 6B, wherein the binder comprises 1.25 wt.% to 20 wt.% in solid of monofunctional acrylate, based on the total weight of the binder precursor.
10B. The ultraviolet absorbing hardcoat precursor of any of Exemplary Embodiments 1B to 6B, wherein the binder comprises 1.25 wt.% to 20 wt.% in solid of difunctional acrylate, based on the total weight of the binder precursor.
11B. The ultraviolet absorbing hardcoat precursor of any of Exemplary Embodiments 1B to 6B, wherein the binder comprises 20 wt.% to 80 wt.% (in some embodiments, 60 wt.% to 80 wt.%) in solid of mutifunctional (e.g., trifunctional or tetrafunctional) acrylate.
12B. An article comprising:
   a substrate having a surface, and
   a hardcoat layer disposed on the surface of the substrate, wherein the hardcoat layer comprises the ultraviolet absorbing hardcoat precursor of any preceding B Exemplary Embodiment.
13B. The article of Exemplary Embodiment 12B, wherein the substrate is a film or a polymer plate.
14B. The article of Exemplary Embodiment 12B, wherein the substrate is one of a film or a polymer plate.
15B. The article of either Exemplary Embodiment 12B or 13B, further comprising a primer layer between the substrate and the ultraviolet absorbing hardcoat precursor layer.

Advantages and embodiments of this invention are further illustrated by the following examples, but the particular materials and amounts thereof recited in these examples, as well as other conditions and details, should not be construed to unduly limit this invention.

### EXAMPLES

### Materials

Unless otherwise noted, all parts, percentages, and ratios, in the Examples and the rest of the specification are by weight. Table 1 (below) provides abbreviations used and a source for all materials used in the Examples and Comparative Examples described below:

**Table 1**

| Abbreviation | Description |
|---|---|
| "A-174" | 3-methacryloxypropyl-trimethoxysilane, obtained from Alfa Aesar, Ward Hill, MA, under trade designation "SILQUEST A-174" |
| "PROSTAB" | 4-hydroxy-2,2,6,6-tetramethylpiperidine 1-oxyl (5 wt.%), obtained from Aldrich Chemical Company, Milwaukee, WI, under trade designation "PROSTAB" |
| "NANOBYK-3820" | 20 nm diameter ZnO sol***, obtained from BYK-Chemie GmbH, Wesel, Germany, under trade designation "NANOBYK-3820" |
| "TEOS" | Tetraethyl orthosilicate, obtained from Wako Pure Chemical Industries, Ltd., Osaka, Japan |
| "SR368" | Trifunctional tris (2-hydroxy ethyl) isocyanurate triacrylate, obtained from Sartomer Americas under trade designation "SR368" |
| "TEGO RAD 2250" | Silicone polyether acrylate, obtained from EVONIK INDUSTRIES, Essen, Germany, under trade designation "TEGORAD 2500" |
| "ESACURE ONE" | Difunctional alpha hydroxyketone, obtained from Lamberti, Galarate, Italy, under trade designation "ESACURE ONE" |
| 1-methoxy-2-propanol | Solvent, obtained from Aldrich Chemical Company, Milwaukee, WI |
| "LUMIRROR U32" | Poly ethylene terephthalate (PET) Film, obtained from Toray Industries INC., Tokyo, Japan, under trade designation "LUMIRROR U32;" 50 micrometers |

| | |
|---|---|
| *** While the manufacturer ofNANOBYK-3820 (BYK-Chemie GmbH, Wesel, Germany) states that the ZnO nanoparticles have an average particle size of 20 nm, an analysis of this ("as-received") product by Transmission Electron Microscopy (TEM) (Model H-8100, from Hitachi, Japan) and by dynamic light scattering equipment (obtained under the trade designation "ZETASIZER NANO" from Malvern Instruments Ltd., Worcestershire, UK) revealed that the actual average size of the ZnO nanoparticles was larger (about 70 nm). The TEM digital photomicrograph and size distribution of the "as-received" ZnO nanoparticles used in the Examples and Comparative Examples described below are shown in FIGS. 1a and 1b, respectively. | |

### Methods

### -Method for Determining Optical Properties

The optical properties such as haze and percent transmittance (TT) of the samples prepared according to the Examples and Comparative Examples were measured by using a haze meter (obtained under the trade designation "NDH5000W" from NIPPON DENSHOKU INDUSTRIES CO., LTD., Tokyo, Japan). Optical properties were determined as prepared samples (i.e., initial optical properties) and after subjecting the samples to steel wool abrasion resistance testing and accelerated weather testing. The "Haze Test" is comparing the difference in haze values before and after subjecting the samples to steel wool abrasion resistance testing and accelerated weather testing.

### -Method for Determining Steel Wool Abrasion Resistance

The scratch resistance of the samples prepared according to the Examples and Comparative Examples was evaluated by the surface changes after the steel wool abrasion test using 30 mm diameter #0000 steel wool after 10 cycles at 350 gram load and at 60 cycles/min. rate. The strokes were 85 mm long. The instrument used for the test was an abrasion tester (obtained under the trade designation "IMC-157C" from Imoto Machinery Co., LTD., Kyoto, Japan). After the steel wool abrasion resistance test was completed, the samples were observed for the presence of scratches and their optical properties (percent transmittance, haze). 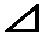 Haze (i.e., haze after abrasion test-initial haze) were measured again using the method described above.

The presence of scratches was rated as follows in Table 2, below.

**Table 2**

| Observation | Rating |
|---|---|
| No scratches | 0 |
| A few very faint scratches, only observed in reflection | 1 |
| Several faint scratches | 2 |
| Several faint to few deep scratches | 3 |
| Large number of deep scratches easily observed in reflected or transmitted light. Almost complete removal of coating. | 4 |

### -Method for Determining Adhesion at Interface Between Coating and Substrate

Adhesion performance of the samples prepared according to the Examples and Comparative Examples were evaluated by a cross-cut test according to JIS K5600 (April 1999), where 5 × 5 grid with 1 mm of interval (i.e., 25 one mm by one mm squares) and tape (obtained under the trade designation "NICHIBAN" from Nitto Denko CO., LTD., Osaka, Japan).

### -Method For Determining UV Absorption Property

UV absorption properties were evaluated in range from 200 nm to 800 nm by UV-vis spectroscopy (obtained under the trade designation "U-4100" from Hitachi High-Technologies Corporation, Tokyo, Japan) according to JIS A 5759, the disclosure of which is incorporated herein by reference.

### -Method for Determining Weatherability

Weatherability was evaluated by using an acceleratred weather tester (obtained under the trade designation "QUV;" Serial No. 90-6645-40, from Q-Lab, Cleveland, OH) according to JIS D 0205, the disclosure of which is incorporated by reference. The haze values before and after accelerated weather testing for 15 days were evaluated. The steel wool abrasion test for the samples after accelerated weather testing for 15 days was also performed. After the accelerated weather testing was completed, optical properties (percent transmittance, haze). 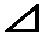 Haze (i.e., haze after accelerated weather testing-initial haze) were measured again using the method described above.

### -Preparation of Surface Modified Zinc Oxide Sol (Sol-1)

12.54 grams of 3-methacryloxypropyl-trimethoxysilane ("A-174") and 0.25 gram of 4-hydroxy-2,2,6,6-tetramethylpiperidine 1-oxyl (5 w.t%; "PROSTAB") were added to a mixture of 200 grams of ZnO sol ("NANOBYK-3820") and 225 grams of 1-methoxy-2-propanol in a glass jar with stirring at room temperature for 10 minutes.

The jar was sealed and placed in an oven at 90°C for 16 hours. Then, the water was removed from the resultant solution with a rotary evaporator at 60°C until the solid wt.% of the solution was close to 45 wt.%.

200 grams of 1-methoxy-2-propanol was charged into the resultant solution, and then the remaining water was removed by using the rotary evaporator at 60°C. The last step was repeated two times for further removal of water from the solution. The final concentration of total ZnO nanoparticles was 46.5 wt.%, which resulted in the ZnO sol containing surface modified ZnO nanoparticles (referred hereinafter as Sol-1).

### -Preparation of Non-Surface Modified ZnO Sol (Sol-2)

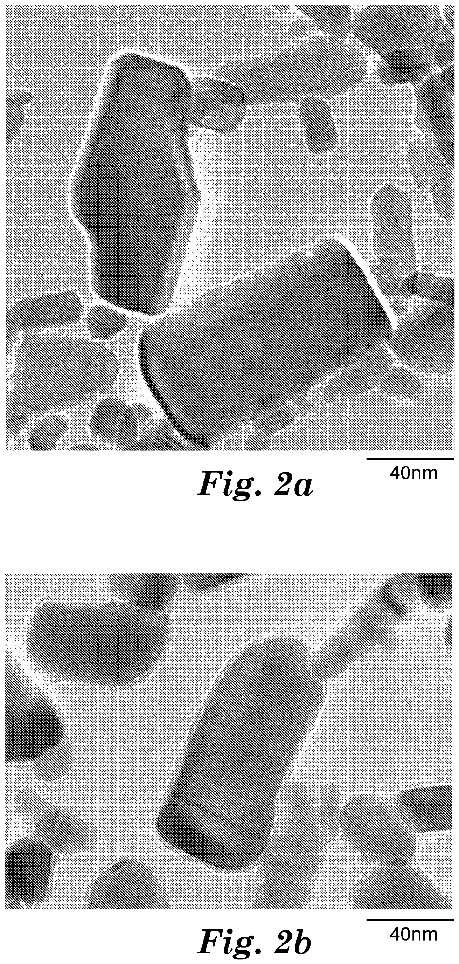

200 grams of ZnO sol ("NANOBYK-3820") and 225 grams of 1-methoxy-2-propanol were mixed in a glass jar with stirring at room temperature for 10 minutes. Then, the water was removed from the resultant solution with a rotary evaporator at 60°C. This last step was repeated two times for further removal of water from the solution. The final concentration of total ZnO nanoparticles was 49.9 wt.% which resulted in the ZnO sol containing non-surface modified ZnO nanoparticles (referred hereinafter as Sol-2). FIG. 2a is a TEM digital photomicrograph of ZnO nanoparticles of Sol-2.

### -Preparation of SiO₂ coated ZnO Sol using surface modified ZnO (Sol-3)

21.5 grams of Sol-1 and 3.467 grams of tetraethyl orthosilicate ("TEOS") were mixed in a glass jar with stirring at room temperature for 10 minutes. Then, 3 grams of water and 1 gram of NH₃ aqueous solution (28%) was added to the mixture. The jar was sealed and stirred at room temperature for 24 hours. Then, the water was removed from the resultant solution with a rotary evaporator at 60°C until the solid wt.% of the solution was close to 45 wt.%.

20 grams of 1-methoxy-2-propanol was charged into the resultant solution, and then the remaining water was removed by using the rotary evaporator at 60°C. This last step was repeated two times for further removal of water from the solution. The final concentration of total ZnO nanoparticles was 40 wt.% which resulted in a sol containing SiO₂ coated ZnO nanoparticles. The obtained SiO₂ coated ZnO nanoparticles were surface modified in the same manner as the Sol-1, which resulted in surface modified SiO₂ coated ZnO sol (final concentration of SiO₂ coated ZnO nanoparticles was 18.27 wt.%, referred hereinafter as Sol-3). FIG. 2b is a TEM digital photomicrograph of SiO₂ coated ZnO nanoparticles of Sol-3, where a thin (a few nm) silica coating on the ZnO nanoparticles was visible.

### -Preparation of Coating Precursor Solution (C-1)

9.85 grams of Sol-3, 0.2 gram of trifunctional tris (2-hydroxy ethyl) isocyanurate triacrylate, ("SR368") were mixed. 0.06 gram of difunctional alpha hydroxyketone ("ESACURE ONE") was added to the mixture as the photoinitiator. The mixture was adjusted to 20 wt.% in solid by adding 1-methoxy-2-propanol. Finally, 0.02 gram of silicone polyether acrylate ("TEGO RAD 2250") was added to the mixture to provide the coating precursor solution C-1.

### -Preparation of Coating Precursor Solution (C-2)

3.82 grams of Sol-1, 0.2 gram of trifunctional tris (2-hydroxy ethyl) isocyanurate triacrylate, ("SR368") were mixed. 0.06 gram of difunctional alpha hydroxyketone ("ESACURE ONE") was added to the mixture as the photoinitiator. The mixture was adjusted to 20 wt.% in solid by adding 1-methoxy-2-propanol. Finally, 0.02 gram of silicone polyether acrylate ("TEGO RAD 2250") was added to the mixture to provide the coating precursor solution C-2.

### -Preparation of Coating Precursor Solution (C-3)

6.62 grams of Sol-2, 0.2 gram of trifunctional tris (2-hydroxy ethyl) isocyanurate triacrylate ("SR368") were mixed. 0.06 gram of difunctional alpha hydroxyketone ("ESACURE ONE") was added to the mixture as the photoinitiator. The mixture was adjusted to 20 wt.% in solid by adding 1-methoxy-2-propanol. Finally, 0.02 gram of silicone polyether acrylate ("TEGO RAD 2250") was added to the mixture to provide the coating precursor solution C-3.

Table 2, below, summarizes the compositions of C-1, C-2 and C-3 coating precursor solutions.

**Table 2**

| Component | Amount in Coating Precursor Solution, grams | | |
|---|---|---|---|
| | C-1 | C-2 | C-3 |
| Non-modified ZnO (i.e., Sol-2) | 0 | 0 | 6.62 |
| ZnO functionalized by A174 (i.e., Sol-1) | 0 | 3.82 | 0 |
| SiO₂ coated ZnO functionalized by A174 (i.e., Sol-3) | 9.85 | 0 | 0 |
| SR368 | 0.2 | 0.2 | 0.2 |
| TEGO RAD 2250 | 0.02 | 0.02 | 0.02 |
| ESACURE ONE | 0.06 | 0.06 | 0.06 |
| 1-methoxy-2-propanol | 0 | 5.98 | 3.81 |
| Total solids wt.% | 20% | 20% | 20% |

### -Coating and Curing of Base Nanoparticle Filled Hardcoat Layer

50 micrometer thick PET film ("LUMIRROR U32;" 50 micrometers) was fixed on a glass table with level adjustment, and then the coating precursor solution was coated on the substrate by using a Mayer Rod # 8. After drying for 5 minutes at 60°C in the air, the coated substrate was passed two times through a UV irradiator (H-bulb, Model DRS, from Heraeus Noblelight America LLC., Gaithersburg, MD) under nitrogen gas. It was estimated that the coated sample surface was irradiated 900 mJ/cm², 700 mW/cm² of ultraviolet (UV-A) radiation.

### Example 1 (Ex-1)

Coat precursor solution (C-1) was coated on PET film ("LUMIRROR U32;" 50 micrometers) by a Mayer Rod # 8. The coating had an estimated dry thickness of 1.5 micrometer. Oven temperature was set at 60°C. After drying for 5 minutes at 60°C in air, the film was cured by UV as described in Coating and Curing of Base Nanoparticle Filled Hardcoat Layer.

### Example 2 (Ex-2)

Example 2 was prepared in the same manner as Example 1, except that C-2 was used in place of C-1.

### Comparative Example A (CE-A)

Comparative Example A was bare PET film ("LUMIRROR U32;" 50 micrometers).

### Comparative Example B (CE-B)

Comparative Example B was prepared in the same manner as Example 1, except that the coating precursor solution (C-3) was coated on the PET film ("LUMIRROR U32;" 50 micrometers).

Examples 1 and 2 and Comparative Examples A and B were tested for their UV- absorption performance, and optical properties, as well as their durability using methods described above.

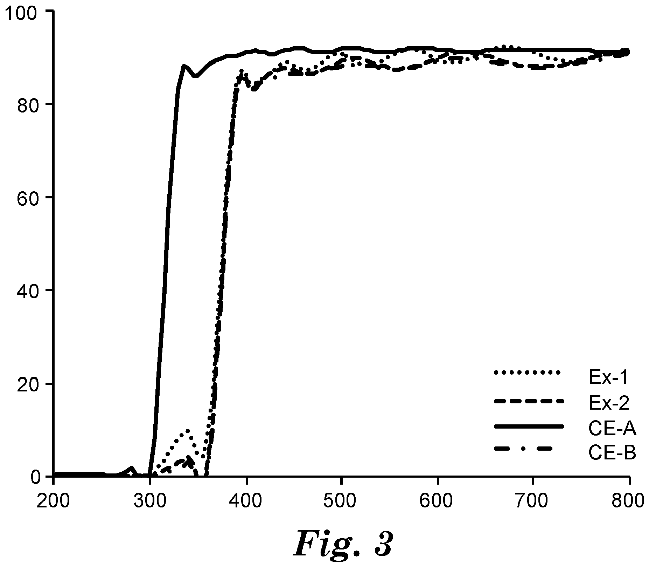

FIG. 3 shows the UV-Vis spectra of Examples 1 and 2 and Comparative Examples A and B.

Table 3, below, summarizes initial optical properties, as well as the durability of Examples 1 and 2 and Comparative Examples A and B after steel wool abrasion testing. Note that Example 1 had an initial haze value of 2.7%, 90.96 % of total transmittance and after steel wool abrasion testing, the haze value could be maintained with 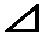 Haze less than 1 %.

In addition, there was hardly any peeling and cracking observed in the Example 1 sample after the adhesion performance test, leading to the conclusion that the Example 1 coatings had excellent adhesion to the PET substrate.

**Table 3**

| Example | Initial Properties | | | After steel wool abrasion test (350 g, 10 cycle) | | | Scratch Rating |
|---|---|---|---|---|---|---|---|
| | TT (%) | Haze (%) | UV cut rate (%) | TT (%) | Haze (%) | 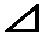 Haze (%) | |
| Example 1 | 90.96 | 2.7 | 81.52 | 90.88 | 3.02 | 0.32 | 1 |
| Example 2 | 90 | 3.29 | 86.43 | 90.56 | 7 | 3.71 | 3 |
| Comparative Example A | 92.51 | 0.8 | 12.35 | 92.8 | 5.96 | 5.16 | 4 |
| Comparative Example B | 89.36 | 3.82 | 87.77 | 90.11 | 10.09 | 6.27 | 4 |

The weatherability of Examples 1 and 2 and Comparative Examples A and B was determined as described above by accelerated weather testing for 15 days. The haze values of Examples 1 and 2 and Comparative Examples A and B are summarized in Table 4, below. Note that for the Example 1 sample there was less than 1% change on haze value before and after accelerated weather testing for 15 days. On the other hand, all Comparative Example samples had higher than 1.5 % of haze value after accelerated weather testing for 15 days, indicating poor weatherability.

**Table 4**

| Sample No. | | Haze (%) | 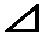 Haze (%) |
|---|---|---|---|
| Example 1 | Initial | 2.49 | 0.41 |
| | After accelerated weather testing | 2.9 | |
| Example 2 | Initial | 2.98 | 1.88 |
| | After accelerated weather testing | 4.86 | |
| Comparative Example A | Initial | 1.53 | 1.88 |
| | After accelerated weather testing | 3.41 | |
| Comparative Example B | Initial | 3.77 | 1.28 |
| | After accelerated weather testing | 5.05 | |

The durability of the Examples 1 and 2 and Comparative Examples A and B samples were further evaluated by subjecting them to steel wool abrasion testing after accelerated weather testing for 15 days. The test data is summarized in Table 5, below. Again, the Example 1 sample exhibited very good steel wool resistance even after accelerated weather testing for 15 days, indicating good weatherability.

**Table 5**

| Sample No. | | Haze (%) | 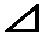 Haze (%) |
|---|---|---|---|
| Example 1 | After accelerated weather testing | 2.9 | 0.33 |
| | After steel wool testing | 3.23 | |
| Example 2 | After accelerated weather testing | 4.86 | 8.65 |
| | After steel wool testing | 13.51 | |
| Comparative Example B | After accelerated weather testing | 5.05 | 1.35 |
| | After steel wool testing | 6.4 | |
| Comparative Example A | After accelerated weather testing | 3.41 | 27.16 |
| | After steel wool testing | 30.57 | |

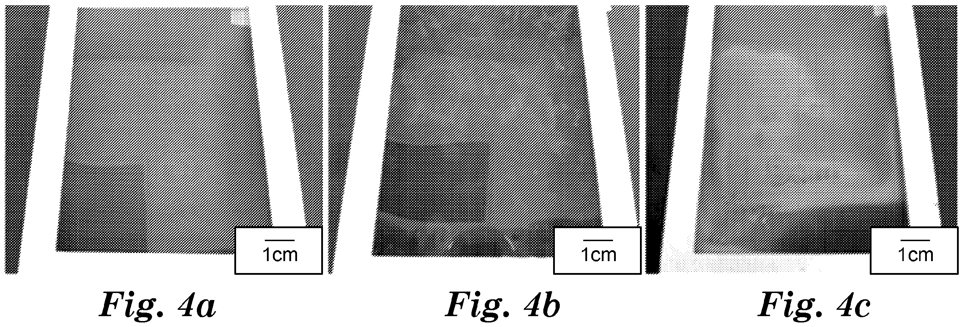

FIGS. 4a, 4b, and 4c, are optical digital images of Example 1 and Comparative Examples A and B, respectively, after accelerated weather testing after 3000 hours.

There was almost no change for the Example 1 sample, even after accelerated weather testing for 3000 hours. On the other hand, Comparative Examples A and B samples were clearly damaged or whitened.

This invention should not be restricted to the embodiments that are set forth in this application for illustrative purposes.

## Claims

1. An ultraviolet absorbing hardcoat comprising:
a binder, and
a mixture of ZnO nanoparticles in a range from 1 wt.% to 90 wt.%, based on the total weight of the hardcoat, wherein the ZnO nanoparticles have a silica coating thereon.

2. The ultraviolet absorbing hardcoat of claim 1, wherein the ZnO nanoparticles have an average particle size in a range from 10 nm to 100 nm.

3. The ultraviolet absorbing hardcoat of either claim 1 or 2, wherein the silica coating has an average thickness in a range from 5 nm to 50 nm.

4. The hardcoat of any preceding claim, wherein the silica coating is surface modified.

5. The hardcoat of any preceding claim, wherein the binder comprises hexafluoropropylene oxide urethane acrylate.

6. The hardcoat of claim 5, wherein the binder further comprises silicone polyether acrylate.

7. The hardcoat of any of claims 1 to 4, wherein the binder comprises 1.25 wt.% to 20 wt.% in solid of monofunctional acrylate, based on the total weight of the binder.

8. The hardcoat of any of claims 1 to 4, wherein the binder comprises 1.25 wt.% to 20 wt. % in solid of difunctional acrylate, based on the total weight of the binder.

9. The hardcoat of any of claims 1 to 4, wherein the binder comprises 20 wt.% to 80 wt.% in solid of multifunctional acrylate, based on the total weight of the binder.

10. An article comprising:
a substrate having a surface, and
a hardcoat layer disposed on the surface of the substrate, wherein the hardcoat layer comprises the hardcoat of any preceding claim.

11. The article of claim 10, wherein the substrate is one of a film or a polymer plate.

12. The article of either claim 10 or 11, further comprising a primer layer between the substrate and the hardcoat layer.

13. An ultraviolet absorbing hardcoat precursor comprising:
a binder precursor, and
a mixture of ZnO nanoparticles in a range from 1 wt.% to 90 wt.%, based on the total weight of the hardcoat precursor, wherein the ZnO nanoparticles have a silica coating thereon.

## Patentansprüche

1. UV-absorbierender Hartüberzug, umfassend:
ein Bindemittel und
ein Gemisch aus ZnO-Nanoteilchen in einem Bereich von 1 Gew.-% bis 90 Gew-%, bezogen auf das Gesamtgewicht des Hartüberzugs, wobei die ZnO-Nanoteilchen eine Siliciumdioxidbeschichtung darauf aufweisen.

2. UV-absorbierender Hartüberzug nach Anspruch 1, wobei die ZnO-Nanoteilchen eine durchschnittliche Teilchengröße in einem Bereich von 10 nm bis 100 nm aufweisen.

3. UV-absorbierender Hartüberzug nach Anspruch 1 oder 2, wobei die Siliciumdioxidbeschichtung eine durchschnittliche Dicke in einem Bereich von 5 nm bis 50 nm aufweist.

4. Hartüberzug nach einem der vorstehenden Ansprüche, wobei die Siliciumdioxidbeschichtung oberflächenmodifiziert ist.

5. Hartüberzug nach einem der vorstehenden Ansprüche, wobei das Bindemittel Hexafluorpropylenoxidurethanacrylat umfasst.

6. Hartüberzug nach Anspruch 5, wobei das Bindemittel ferner Silikonpolyetheracrylat umfasst.

7. Hartüberzug nach einem der Ansprüche 1 bis 4, wobei das Bindemittel zu 1,25 Gew.-% bis 20 Gew.-% monofunktionelles Acrylat, bezogen auf das Gesamtgewicht des Bindemittels, als Feststoff umfasst.

8. Hartüberzug nach einem der Ansprüche 1 bis 4, wobei das Bindemittel zu 1,25 Gew.-% bis 20 Gew.-% difunktionelles Acrylat, bezogen auf das Gesamtgewicht des Bindemittels, als Feststoff umfasst.

9. Hartüberzug nach einem der Ansprüche 1 bis 4, wobei das Bindemittel zu 20 Gew.-% bis 80 Gew.-% multifunktionelles Acrylat, bezogen auf das Gesamtgewicht des Bindemittels, als Feststoff umfasst.

10. Artikel, umfassend:
ein Substrat mit einer Oberfläche und
eine Hartüberzugsschicht, die auf der Oberfläche des Substrats angeordnet ist, wobei die Hartüberzugsschicht den Hartüberzug nach einem der vorstehenden Ansprüche umfasst.

11. Artikel nach Anspruch 10, wobei das Substrat eines von einer Folie oder einer Polymerplatte ist.

12. Artikel nach einem der Ansprüche 10 oder 11, ferner umfassend eine Grundierungsschicht zwischen dem Substrat und der Hartüberzugsschicht.

13. Vorläufer eines UV-absorbierenden Hartüberzugs, umfassend:
einen Bindemittelvorläufer und
ein Gemisch aus ZnO-Nanoteilchen in einem Bereich von 1 Gew.-% bis 90 Gew-%, bezogen auf das Gesamtgewicht des Hartüberzugvorläufers, wobei die ZnO-Nanoteilchen eine Siliciumdioxidbeschichtung darauf aufweisen.

## Revendications

1. Revêtement dur absorbant les ultraviolets comprenant :
un liant, et
un mélange de nanoparticules de ZnO dans une plage allant de 1 % en poids à 90 % en poids, sur la base du poids total du revêtement dur, dans lequel les nanoparticules de ZnO ont un revêtement de silice sur celles-ci.

2. Revêtement dur absorbant les ultraviolets selon la revendication 1, dans lequel les nanoparticules de ZnO ont une taille moyenne de particules dans une plage allant de 10 nm à 100 nm.

3. Revêtement dur absorbant les ultraviolets selon la revendication 1 ou la revendication 2, dans lequel le revêtement de silice a une épaisseur moyenne dans une plage allant de 5 nm à 50 nm.

4. Revêtement dur selon une quelconque revendication précédente, dans lequel le revêtement de silice est modifié en surface.

5. Revêtement dur selon une quelconque revendication précédente, dans lequel le liant comprend de l'uréthane-acrylate d'oxyde d'hexafluoropropylène.

6. Revêtement dur selon la revendication 5, dans lequel le liant comprend en outre un acrylate de polyéther de silicone.

7. Revêtement dur selon l'une quelconque des revendications 1 à 4, dans lequel le liant comprend 1,25 % en poids à 20 % en poids en solide d'acrylate monofonctionnel, sur la base du poids total du liant.

8. Revêtement dur selon l'une quelconque des revendications 1 à 4, dans lequel le liant comprend 1,25 % en poids à 20 % en poids en solide d'acrylate difonctionnel, sur la base du poids total du liant.

9. Revêtement dur selon l'une quelconque des revendications 1 à 4, dans lequel le liant comprend 20 % en poids à 80 % en poids en solide d'acrylate multifonctionnel, sur la base du poids total du liant.

10. Article comprenant :
un substrat ayant une surface, et
une couche de revêtement dur disposée sur la surface du substrat, dans lequel la couche de revêtement dur comprend le revêtement dur selon une quelconque revendication précédente.

11. Article selon la revendication 10, dans lequel le substrat est l'un parmi un film ou une plaque polymère.

12. Article selon la revendication 10 ou 11, comprenant en outre une couche d'apprêt entre le substrat et la couche de revêtement dur.

13. Précurseur de revêtement dur absorbant les ultraviolets comprenant :
un précurseur de liant, et
un mélange de nanoparticules de ZnO dans une plage allant de 1 % en poids à 90 % en poids, sur la base du poids total du précurseur de revêtement dur, dans lequel les nanoparticules de ZnO ont un revêtement de silice sur celles-ci.
